# EUROPÄISCHE PATENTSCHRIFT

(11) **EP 3 897 323 B1**
(45) Veröffentlichungstag und Bekanntmachung des Hinweises auf die Patenterteilung: **07.06.2023**
(21) Anmeldenummer: 19820753.2
(22) Anmeldetag: 13.12.2019
(51) Int. Cl.: A47J 45/06, A47J 27/09

(54) **VORRICHTUNG ZUR BESTIMMUNG ODER ÜBERWACHUNG ZUMINDEST EINES BETRIEBSZUSTANDES EINES KOCHGEFÄSSES**
APPARATUS FOR DETERMINING OR MONITORING AT LEAST ONE OPERATING STATE OF A COOKING VESSEL
APPAREIL PERMETTANT DE DÉTERMINER OU DE SURVEILLER AU MOINS UN ÉTAT DE FONCTIONNEMENT D'UN RÉCIPIENT DE CUISSON

(30) Priorität: 19.12.2018 EP 18213887
(43) Veröffentlichungstag der Anmeldung: 27.10.2021
(73) Patentinhaber: AMC International Alfa Metalcraft Corporation AG, 6343 Rotkreuz (CH)
(72) Erfinder: BECK, Hans-Jürgen, 6014 Luzern (CH)
(74) Vertreter: Liebetanz, Michael
(86) Internationale Anmeldenummer: PCT/EP2019/085164
(87) Internationale Veröffentlichungsnummer: WO 2020/126934

(56) Entgegenhaltungen:
- WO-A1-2008/154763
- DE-A1- 2 909 129
- US-A- 4 571 580

## Beschreibung

### TECHNISCHES GEBIET

Die vorliegende Erfindung betrifft eine Vorrichtung zur Bestimmung und Darstellung oder Überwachung zumindest eines Betriebszustandes eines Kochgefässes, ausgewählt aus der Gruppe von Temperatur (T), Druck (P), oder Luftfeuchtigkeit (H) eines Kochgefässes, mit den Merkmalen des Oberbegriffs des Anspruchs 1.

### STAND DER TECHNIK

Ein solche Vorrichtung von der Anmelderin ist aus der EP 2 157 891 A1 (= WO 2008/154763 A1) bekannt, bei der ein Steuergerät der Vorrichtung auf einen Deckel des Kochgefässes aufgesetzt wird, wobei im Deckel weitere Elemente der Vorrichtung vorgesehen sind. Diese dienen um Zusammenspiel, um dem Benutzer unter anderem die Garzeit zu signalisieren. Der Vorteil der zweigeteilten Vorrichtung der Erfindung liegt unter anderem darin, dass der Benutzer nur ein Steuergerät benötigt, welches mit einer Vielzahl von Deckeln von Kochgefässen zusammenarbeitet.

### DARSTELLUNG DER ERFINDUNG

Ausgehend von diesem Stand der Technik liegt der Erfindung die Aufgabe zugrunde, eine verbesserte Vorrichtung anzugeben, die für den Benutzer einfacher handhabbar ist. Bei dem Stand der Technik ist das auf den zentralen Knopf des Deckels aufzusetzende Steuergerät um seine Längsachse zu drehen, um die Temperatur festzustellen. Darüber hinaus besteht bauartbedingt wegen dieser Drehung keine feste Verbindung zwischen dem Steuergerät und dem Deckel, so dass bei einem unachtsamen Abheben des Deckels, das Steuergerät aus seiner Position herunterfallen kann.

Der Stand der Technik geht von der Anzeige der Temperatur im zentralen Knopf des Deckels des Kochgefässes aus. Diese Anzeige wird beibehalten, insbesondere soll der Benutzer hier an die ihm bekannte Technologie des Steuergerätes auf dem Deckel des Kochgefässes anknüpfen können.

Eine Vorrichtung zur Bestimmung und Darstellung oder Überwachung zumindest eines Betriebszustandes eines Kochgefässes mit Deckel gemäss der Erfindung hat einen an dem Deckel des Kochgefässes befestigbaren Deckelknopf mit einer in diesem montierten Messeinrichtung zur Erkennung des Betriebszustandes und ein Steuergerät mit einer Signalisiereinrichtung. Dabei umfasst diese eine Anzeigevorrichtung umfasst, um einen Ist-Zustand des Betriebszustandes anzuzeigen. Das Steuergerät ist ausgestaltet, ein Signal auszugeben, wenn ein Sollwert des Betriebszustandes erreicht ist. Die Messeinrichtung weist eine verschwenkbare Drehanzeige auf. Das Steuergerät und der Deckelknopf verfügen über komplementäre Rastmittel, so dass das Steuergerät in einer einzigen vorbestimmten Drehposition zum Deckelknopf auf dem Deckelknopf aufsetzbar ist. Die Drehanzeige verfügt über einen an dieser befestigten Permanentmagneten und das Steuergerät weist eine Magnetsensorvorrichtung zur Erfassung der Drehposition der Drehanzeige auf.

Dabei bedeutet Aufsetzen des Steuergerätes in einer einzigen vorbestimmten Drehposition zum Deckelknopf auf dem Deckelknopf zum Beispiel das einrastbare Aufsetzen in einer vorbestimmten Drehposition, vorteilhafterweise über einen Formschluss von Rastelementen oder das Festschrauben des Steuergerätes auf dem Deckelknopf bis in die vorbestimmte Drehposition. Auch kann es ein Bajonettverschluss sein, der zwischen Deckelknopf und Steuergerät ausgestaltet ist.

Um ein Verschieben oder Herabfallen des Steuergerätes zu vermeiden, ist eine Rastverbindung oder Schraubverbindung vorgesehen, mit der der Aufsatz des Steuergerätes auf dem Knopf des Deckels einrastbar ist. Damit ist zugleich ein direktes Aufsetzen ohne ein vorheriges Drehen des Knopfes möglich. Um in diesem Zusammenhang direkt die Temperatur feststellen zu können, ist auf dem Anzeigeelement des Temperatursensors ein Magnet befestigt, dessen Position und/oder Orientierung durch einen entsprechenden Magnetsensor im Aufsatz des Steuergerätes detektiert wird.

Bei einem anderen Ausführungsbeispiel ist der Magnet im Knopf nicht zentrisch vorgesehen. Der Magnetsensor kann eine Hall-Sonde sein, die an der Unterseite des Aufsetzgerätes vorgesehen ist.

Anstelle eines Temperatursensors können auch andere Sensoren vorgesehen sein, bei denen eine um eine zentrale Achse sich drehende Zeigeranzeige vorgesehen ist.

Der Permanentmagnet kann ein Diametralmagnet sein. Dieser kann zentriert auf der Longitudinalachse der Vorrichtung montiert sein. Der Permanentmagnet kann auch exzentrisch angeordnet sein.

Das Steuergerät kann einen Sender aufweisen, mit dessen Hilfe es möglich ist, ein Steuersignal zu erzeugen, welches in einer drahtlosen Weise zu einem Empfänger eines Heizgeräts oder Smart Device oder Router übermittelbar ist, um auf das Kochgefäss einzuwirken.

Schliesslich können für unterschiedliche Deckel unterschiedlich starke Permanentmagneten und unterschiedliche Einbauwinkelpositionen von Permanentmagneten vorgesehen sind und das Steuergerät kann ausgelegt ist, neben der Drehposition auch die Stärke des Permanentmagneten zwecks Unterscheidung der Deckelknöpfe festzustellen.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Deckels eines Kochgefässes mit einem auf den Deckelknopf aufgesetztem Steuergerät gemäss einem Ausführungsbeispiel der Erfindung;
- Fig. 2: eine Querschnittsansicht des Deckelknopfes nach Fig. 1 mit einem in einem Abstand zu diesem dargestellten Steuergerät;
- Fig. 3A: einer Detailansicht nach Fig. 2 eines Aussenbereichs des Deckelknopfes mit aufgesetztem Steuergerät im Bereich der Verriegelung;
- Fig. 3B: einer Detailansicht nach Fig. 2 eines Aussenbereichs des Deckelknopfes im Bereich der Verriegelung bei gedrücktem Verriegelungsknopf;
- Fig. 4: einer Detailansicht nach Fig. 2 des mittleren Bereichs des Deckelknopfes bei aufgesetztem Steuergerät;
- Fig. 5: eine perspektivische Ansicht des Deckels eines Kochgefässes mit dem auf den Deckelknopf aufgesetztem Steuergerät nach Fig. 1 aus einer anderen Blickrichtung;
- Fig. 6: eine perspektivische Ansicht des Deckels eines Kochgefässes ohne aufgesetztes Steuergerät nach Fig. 5;
- Fig. 7: eine perspektivische Ansicht des Deckelknopfes des Ausführungsbeispiels nach Fig. 6; und
- Fig. 8: eine perspektivische Ansicht des Steuergeräts von unten.

### BESCHREIBUNG BEVORZUGTER AUSFÜHRUNGSFORMEN

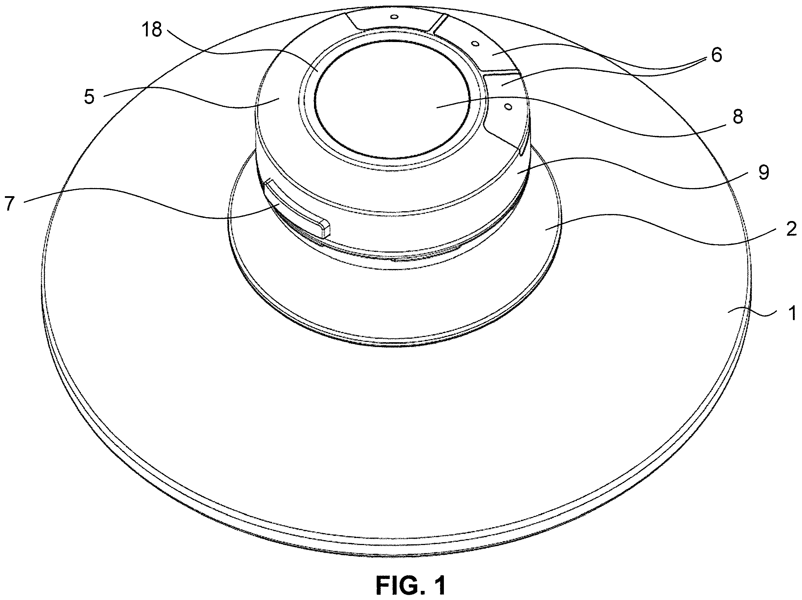

Die Fig. 1 zeigt eine perspektivische Ansicht eines runden Deckels 1 eines (in der Fig. nicht dargestellten) Kochgefässes mit einem auf dem aus der Oberfläche des Deckels 1 herausragenden Deckelknopfes 2 aufgesetzten Steuergerät 5 gemäss einem Ausführungsbeispiel der Erfindung;

Das Steuergerät 5 ist fest auf dem Deckelknopf 2 aufgesetzt und kann durch die Entriegelungstaste 7 entriegelt und dann vom Deckel 1 abgenommen werden. In alternativen Ausführungsbeispielen kann das Steuergerät auch aufgeschraubt sein, wobei dann die Endstellung an einem Anschlag einrasten kann oder nur gegen ihn anschlägt. Das Steuergerät 5 weist ferner vorteilhafterweise Eingabetasten oder Eingabeschalter 6 auf, oder einen Einstellring oder eine Lünette. Dies sind im vorliegenden Ausführungsbeispiel drei. In der Fig. 1 sind drei solche Taster dargestellt. Entlang des Umkreises des Zylindermantels 9 des Steuergeräts 5 auf der Seite (in der Zeichnung auf der nicht dargestellten Rückseite) zwischen der Entriegelungstaste 7 und den Tastern 6 der Zugang (nicht dargestellt) zu einem Batteriefach 50 vorgesehen, welches in anderen Figuren dargestellt ist. Das einer flachen Scheibe oder Puck nachgeformte Steuergerät 5, also einen flachen Zylinder darstellend, verfügt über eine zentrale LED/LCD Anzeige 8, die unterhalb einer Glasscheibe 18 angeordnet ist, die die LED/LCD-Anzeige 8 vollkommen abdeckt und schützt.

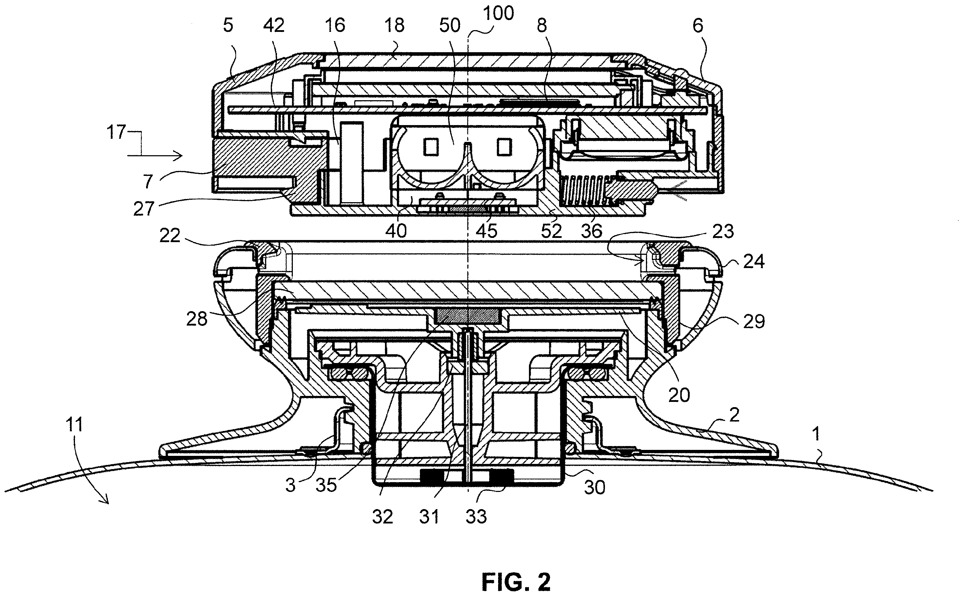

Die näheren Details von Deckelknopf 2 und Steuergerät 5 werden im Zusammenhang mit der Fig. 2 beschrieben, welche eine Querschnittansicht des Deckelknopfes 2 nach Fig. 1 mit einem in einem Abstand zu diesem dargestellten Steuergerät 5 zeigt. Das Steuergerät 5 ist somit im Bild nicht auf den Deckelknopf 2 aufgesetzt. Der Deckelknopf 2 ist mit Hilfe einer umlaufenden Haltehülse 3 auf dem Deckel 1 befestigt. In dem um die eine Symmetrieachse bildende Achse 100 angeordneten hohlzylindrischen Gehäuse des Deckelknopfes 2 ist eine nach unten geschlossene Messdose 30 eingesetzt, in der auf der Achse 100 eine Drehachse 31 mit einem unten angesetzten Bimetall 33 vorgesehen ist. Die Drehachse 31 ist in einem Lager 32 gelagert und mit der Anzeigescheibe 20 fest verbunden. Die Messdose 30 ist dabei gegenüber dem Raum aussen dicht im Deckel 1 eingesetzt und ragt hier etwas in den vom Deckel 1 abgedeckten Garraum 11 eines Kochgefässes hinein. Somit wird die Temperatur des Gases und/oder Wasserdampfes im Kochgefäss über die hier metallene Messdose 30 direkt auf die Bimetallspirale 33 übertragen. Somit ist in einfacher Weise eine genaue Temperaturmessung möglich. In anderen, in den Zeichnungen nicht dargestellten Ausführungsbeispielen können andere Sensoren, die einen Druck oder die Luftfeuchtigkeit messen eingesetzt werden, wenn diese eine Anzeige haben, die vorteilhafterweise über eine zentrale Achse 31 auf eine Scheibe 20 übertragen wird. Die Erfindung ist also nicht auf eine Temperaturmessung und Steuerung beschränkt.

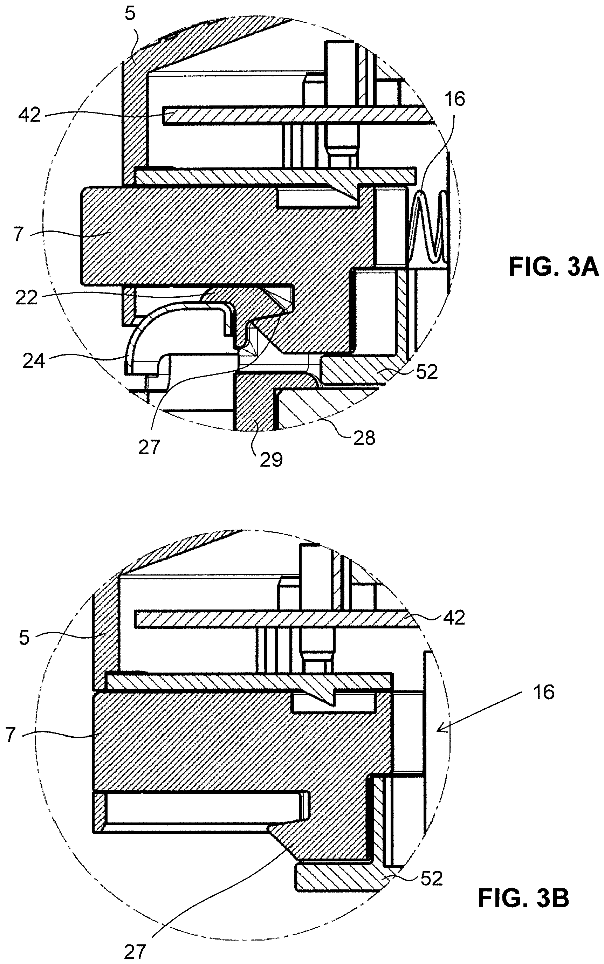

Die Beschreibung der Fig. 2 nimmt gleichzeitig ferner Bezug auf drei Detailansichten. Die Fig. 3A zeigt eine Detailansicht nach Fig. 2 eines Aussenbereichs des Deckelknopfes 2 mit aufgesetztem Steuergerät 5 im Bereich der Verriegelungstaste 7, während die Fig. 3B eine Detailansicht nach Fig. 2 eines Aussenbereichs des Deckelknopfes 2 im Bereich der gedrückten Verriegelungstaste 7, wobei das Steuergerät 5 vom Deckelknopf 2 entfernt worden ist.

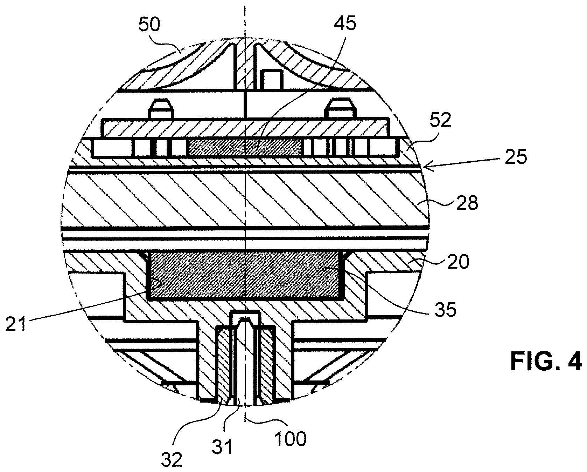

Die Fig. 4 zeigt eine Detailansicht nach Fig. 2 mit dessen mittlerem Bereich des Deckelknopfes 2, wobei hier allerdings das Steuergerät 5 aufgesetzt ist, sodass nur ein schmaler Spalt 25 zwischen Deckelknopf 2 und Steuergerät 5 verbleibt. Die drehbare Scheibe 20 zeigt in bekannter Weise die Temperatur innerhalb des Kochgefässes, also unterhalb Deckels 1, an. Dafür ist eine in den Zeichnungen nicht dargestellte Skala vorgesehen. Diese kann beispielsweise in der oberhalb der Drehscheibe 20 vorgesehen Glasscheibe 28 angeordnet sein. Die Glasscheibe 28, die die Anzeigescheibe 20 abdeckt, wird von einem ringförmigen Haltering 29 gehalten, der sich unterhalb eines Verriegelungsrandes 22 befindet. Der Verriegelungsrand 22 setzt auf einem äusseren Umkreisrand 24 auf. Damit besteht ein vom Verriegelungsrand 24 und der Glasscheibe 28 berandeter Aufnahmeraum, in dem der untere Teil des Steuergeräts 5 einsetzbar ist. Das Steuergerät 5 ist durch eine Gehäuseunterseite 52 nach unten verschlossen, an der sich auf der in der Fig. 2 auf der linken Seite die Entriegelungstaste 7 anschliesst, die über einen Riegel 27 mit einer nach aussen gerichteten Nase verfügt, welcher Riegel 27 in die Halteausnehmung 23 eingreifen kann. Auf der gegenüberliegenden Seite diametral gegenüber ist ein Rastbolzen 37 vorgesehen, der gegenüber einer weiteren radial angeordneten Feder 36 radial gefedert ist. Gleiches gilt für die Entriegelungstaste 7, die durch eine Feder 16 (hier in einer Hülse zusammengepresst dargestellt) radial nach aussen in eine Ruheposition gestossen werden kann. Die Gehäuseunterseite 52 ist im zentralen Bereich um die Achse 100 als Wand dünner ausgeführt und weist einen zentralen Winkelsensor 45 auf, der an einer Platine 40 des Winkelsensors 45 angeordnet ist. Aus Platzgründen befindet sich direkt oberhalb dieser Platine 40 das Batteriefach 50, welches im rechten Winkel zur Entriegelungstaste 17 und zum Haltebolzen 37 über eine Öffnung auf der Aussenseite des Steuergeräts 5 zugänglich ist. Das Batteriefach 50 befindet sich direkt unter der Schaltplatine (PCB) der Steuerelektronik 42, die unterhalb der Abdeckung des Steuergerätes 5 angeordnet ist. Auf der rechten Seite der Fig. 2 ist im Querschnitt ein Taster 6 der Eingabeschalter dargestellt. Oberhalb der Steuerelektronik 42 ist das Display oder Anzeigefeld 8 des Steuergeräts 5 dargestellt, welches durch eine Glasscheibe 18 abgedeckt wird.

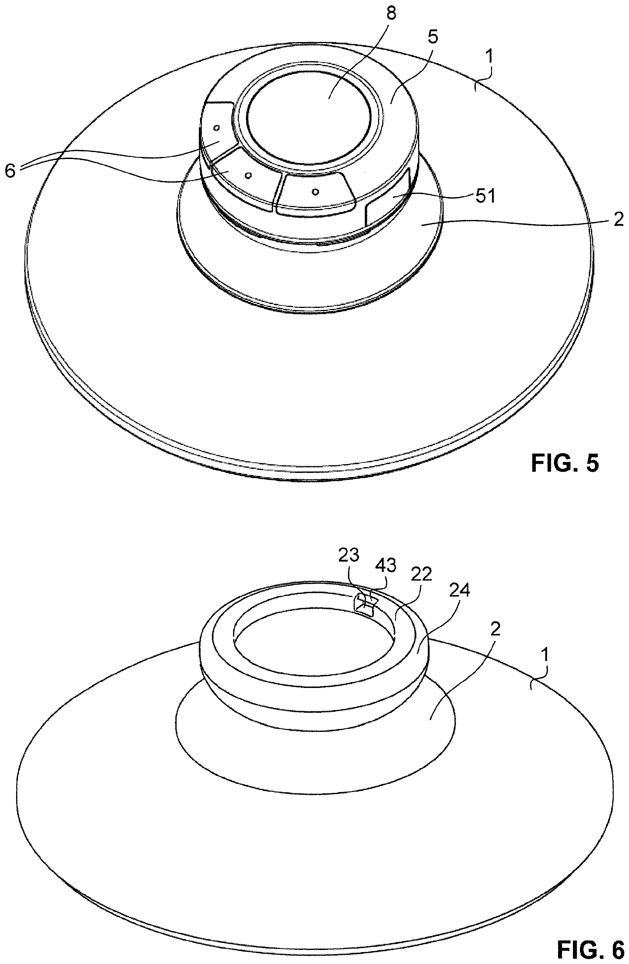

Aus dem Stand der Technik der Anmelderin ist ein Deckelknopf ähnlicher Bauart sowie ein Steuergerät ähnlicher Bauart bekannt, welcher jedoch beim Aufsetzen gedreht werden muss, um die Elektronik auf die richtige Temperatur einzustellen. Auch ist beim Stand der Technik nachteilig, dass die Drehbewegung des Steuergerätes dazu führt, dass das Steuergerät 5 nur lose auf dem Deckelknopf 2 aufliegen kann und beim Abheben des Deckels 1 vom Kochgefäss, beispielsweise zum Prüfer des Garguts, gegebenenfalls herabgleiten kann und daher zu solchen Gelegenheiten entfernt werden sollte. Hier hat die vorliegende Erfindung Abhilfe dahingehend geschaffen, dass mechanisch das Steuergerät auf den Deckelknopf 2 aufsetzbar und verriegelbar ist. Weitere Erläuterungen hierzu finden sich im Zusammenhang mit der Beschreibung der Fig. 5 bis 8.

Unter Verweis auf die Fig. 1 bis 4 wird im Folgenden die Messwertaufnahme erläutert. Für eine direkte Feststellung der im Kochgefäss herrschenden Temperatur wird ja die Achse 31 mit der Bimetallspirale in der Messdose 30 gedreht, so dass die Anzeigescheibe 20 die Temperatur im Deckelknopf 2 anzeigt. Bei anderen Messdosen kann dies auch Feuchtigkeit und/oder Druck sein. Für die drahtlose Übertragung des mechanisch auf und durch die Anzeigescheibe 20 angezeigten Temperatur auf das Steuergerät 5 ist in der Anzeigescheibe 20 eine zentrale Ausnehmung 21 als Vertiefung vorgesehen, in der ein Permanentmagnet 35 eingesetzt ist. In dem Ausführungsbeispiel der Fig. 2 ist dieser Permanentmagnet 35 zentral angeordnet und dreht sich somit um die Hauptachse 100 des Gerätes. In anderen Ausführungsbeispielen kann dieser Magnet 35 auch ausserhalb der Achse 100 seitlich auf oder auch unter der Anzeigescheibe 20 angeordnet sein, ohne dass eine Ausnehmung 21 vorhanden sein muss.

Zentral gegenüber auf der Achse 100 ist in dem Steuergerät 5 ein Winkelsensor 45, beispielsweise eine Hallsonde, angeordnet, mit der es möglich ist, die Ausrichtung des darunterliegenden Magneten 35 festzustellen und somit dem Steuergerät die aktuelle Temperatur ohne eine entsprechende Justage wie beim Stand der Stand der Technik anzugeben. Der Winkelsensor 45 kann auch dezentral ausserhalb der Mittelachse 100 im Steuergerät vorgesehen sein.

Wie im Zusammenhang mit den Fig. 5 bis 8 erläutert werden wird, rastet das Steuergerät 5 in genau einer Position auf dem Deckelknopf 2 ein, so dass eine feste Beziehung zwischen Drehposition der Anzeigescheibe 20 und der Temperatur ablesebar ist. Somit ist es dem Benutzer möglich, das Steuergerät 5 auf den Deckelknopf 2 aufzuklippsen und das Steuergerät 5 den ganzen Kochvorgang auf dem Deckelknopf 2 zu belassen, da beim Abheben des Deckelknopfes 2 das Steuergerät 5 fest mit diesem verbunden bleibt. Gleichzeitig ist es nicht notwendig, eine Einstellung für die Feststellung der Temperatur vorzunehmen, da durch den Magnetsensor 45 die Temperatur direkt von der durch den mechanischen Bimetallsensor 33 eingestellten Winkel der Drehscheibe 20 auf die Steuerelektronik 42 übermittelbar ist. Ein Abstand von zwischen 5 und 6 Millimeter zwischen dem Diametral-Magnet 35 und Sensor 45 gestatten eine leichte Erfassung der Drehposition des Magneten 35. Dabei wird als Diametralmagnet 35 ein Magnet bezeichnet, bei dem Nord- und Südpol des Magneten 35 parallel zur der Ebene der Anzeigescheibe 20 liegen und bei der zentrierten Anordnung des Magneten senkrecht von der Achse 100 durchstossen werden. Wesentlich ist, dass an seiner Unterseite eine homogene horizontale Flussdichte aufweist.

Zusätzlich kann durch die Grösse und der Winkelposition des eingesetzten Magneten 35 festgestellt werden, welcher Deckel und damit welches Kochgefäss eingesetzt wird, da das Steuergerät 5 beim Aufklippsen auf den Deckelknopf 2 direkt das zugrunde legende Kochgefäss in seinen Ausmassen, welche durch den zentralen Deckelknopf 2 vorgegeben ist, feststellen kann, in dem die Deckelknopferkennung durch eine unterschiedliche magnetische Orientierung und / oder Magnetfeldstärke festgestellt wird.

Die Deckelknopferkennung, kann auch durch das Vorsehen eines weiteren Anzeigeelementes wie das Feststellen des Farbe der Anzeigescheibe 20 oder ein anderes visuelles Identifikationsmittel im Deckelknopf 2 geschehen, welches über einen zur Anzeige komplementären Sensor als Ergänzung zur Hallsonde 45 ausgelesen wird. Farbmerkmal, ggf. Grösse des Farbflecks oder Magnetfeldstärke können dabei mehrere unterschiedliche Werte annehmen, so dass eine Deckelknopfserie kodiert werden kann.

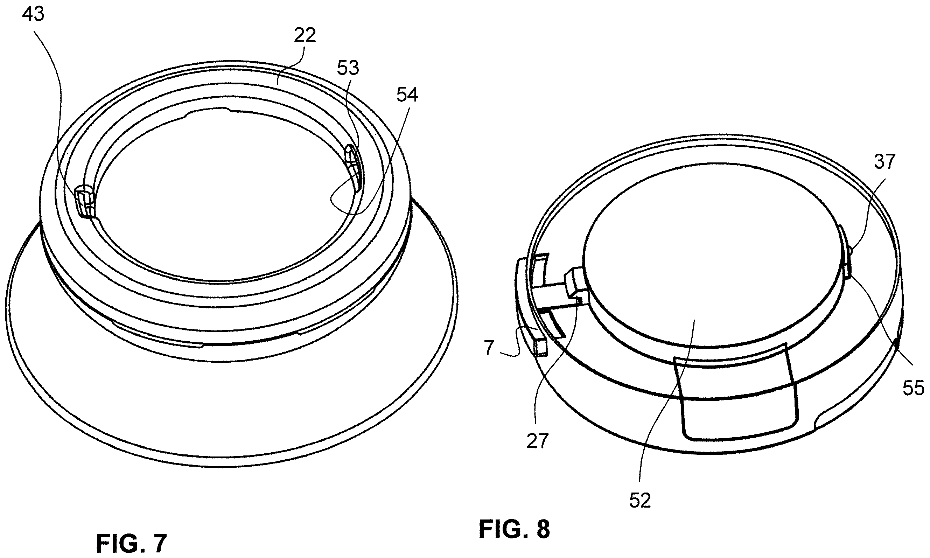

Die Fig. 5 zeigt eine perspektivische Ansicht des Deckels 1 eines Kochgefässes mit dem auf den Deckelknopf 2 aufgesetztem Steuergerät nach Fig. 1 aus einer anderen Blickrichtung, in der insbesondere die Abdeckung 51 des Batteriefaches 50 sichtbar ist. Die Fig. 6 zeigt eine perspektivische Ansicht des Deckels 1 eines Kochgefässes ohne aufgesetztes Steuergerät 5 nach Fig. 5; Fig. 7 zeigt dazu eine perspektivische Ansicht des Deckelknopfes des Ausführungsbeispiels nach Fig. 6; und Fig. 8 schliesslich zeigt eine perspektivische Ansicht des Steuergeräts 5 von unten, welche also auf den Deckelknopf nach Fig. 7 aufgesetzt werden soll.

Die zentrale Ausnehmung verfügt über zwei zusätzliche Ausnehmungen 23 und 53, wobei die Ausnehmung 53 auf der einen Seite über ein Zusatzsackloch 54 verfügt, um den Rastbolzen 37 bzw. dessen Spitze aufzunehmen. Auf der gegenüberliegenden Seite ist die Ausnehmung 23 dabei einfach abgedeckt durch eine Schräge 43, auf die der Riegel 27 auflaufen kann und zurückgedrückt wird. Die Ausnehmung 53 weist vorteilhafterweise in Umfangsrichtung eine gewisse über den Durchmesser des Rastbolzens 37 hinausgehende Breite auf, um ein winkelrichtiges Aufsetzen mit einem leicht überstehenden Rand 55 zu gewährleisten.

Eine Zieltemperatur kann durch ein Programm gesetzt werden, welches durch die Taster 6 auf dem Steuergerät einstellbar ist. Die Temperatur, die bei Aufsetzen des Steuergeräts entsprechend der Drehposition der Anzeigescheibe 20 durch den Hallsensor 45 direkt erfasst werden kann, wird kontinuierlich aufgezeichnet. Das Steuergerät 5 kann nur in der einen besagten Position auf dem Deckelknopf 2 aufgesetzt werden, wobei die Zentrierung sich durch die Formgebung vom Deckelknopf 2 und Unterseite des Steuergeräts 5 ergibt. Das Steuergerät 5 wird gedreht, bis es leicht in die Ausnehmung hineingleitet, in dieser Position kann das Steuergerät 5 in die Endposition über die Schräge 43 gedrückt werden, ohne dass die Entriegelungstaste 7 gedrückt werden muss.

Durch das Drücken der Entriegelungstaste 7 kann dagegen das Steuergerät 5 in der umgekehrten Reihenfolge aus dem Deckelknopf herausgezogen werden. Während die Anzeigescheibe 20 lediglich die Temperatur anzeigt, ist es mit dem Steuergerät 5 und dessen Anzeigefeld 8 möglich, neben der aktuellen Temperatur die Zieltemperatur und die verbleibende Kochzeit und das Programm und den Beginn der Kochzeit anzuzeigen. Es ist vorteilhaft, wenn die Steuerelektronik im Steuergerät 5 eine drahtlose Verbindung mit anderen Geräten oder Herden oder Smart Devices und damit in eine Cloud der Anmelderin oder des Benutzers aufbauen kann, um beispielsweise über die Steuerung der Heizstärke die Wärmezufuhr in das Kochgefäss zu steuern. Wenn drei Taster 6 vorgesehen sind, sind üblicherweise einer für eine Plus-Richtung, einer für eine Minus-Richtung und einer für die Bestätigung der Eingabe vorgesehen. Auch wenn das Batteriefach 50 hier als Fach für zwei AAA-Batterien dargestellt ist, sind andere Batterielösungen wie Knopfzellen möglich. Der Magnetfeldsensor 45 detektiert ggf. die magnetische Feldstärke, womit eine Unterscheidung verschiedener Deckelknöpfe 2 möglich ist. Die magnetische Feldrichtung gibt den Temperaturwert heraus.

**BEZUGSZEICHENLISTE**

| | | | |
|---|---|---|---|
| 1 | Deckel | 29 | Haltering |
| 2 | Deckelknopf | 30 | Messdose |
| 3 | Haltehülse | 31 | Drehachse mit Bimetall |
| 5 | Steuergerät | 32 | Lager |
| 6 | Eingabetaster/schalter | 33 | Bimetallspirale |
| 7 | Entriegelungstaste | 35 | Magnet |
| 8 | Anzeigefeld des Steuergeräts | 36 | Feder |
| 9 | Zylindermantel | 37 | Rastbolzen |
| 11 | Garraum | 40 | Platine des Winkelsensors |
| 16 | Feder | 42 | PCB der Steuerelektronik |
| 17 | Entriegelungstaste | 43 | Schräge oberhalb der Ausnehmung |
| 18 | Glasscheibe | | |
| 20 | Anzeigescheibe | 45 | Winkelsensor |
| 21 | Ausnehmung | 50 | Batteriefach |
| 22 | Verriegelungsrand | 51 | Batteriefachabdeckung |
| 23 | Halteausnehmung, | 52 | Gehäuseunterseite |
| | Unterschnitt | 53 | Ausnehmung |
| 24 | Umkreisrand | 54 | Sackloch |
| 25 | Spalt | 55 | Rand |
| 27 | Riegel | 100 | Zentralachse |
| 28 | Glasscheibe | | |

## Patentansprüche

1. Vorrichtung zur Bestimmung und Darstellung oder Überwachung zumindest eines Betriebszustandes eines Kochgefässes mit Deckel (1), ausgewählt aus der Gruppe von Temperatur, Druck oder Luftfeuchtigkeit eines Kochgefässes, wobei die Vorrichtung einen an dem Deckel (1) des Kochgefässes befestigbaren Deckelknopf (2) mit einer in diesem montierten Messeinrichtung (30, 33) zur Erkennung des Betriebszustandes und ein Steuergerät (5) mit einer Signalisiereinrichtung (8) aufweist, wobei die Signalisiereinrichtung (8) eine Anzeigevorrichtung umfasst, um einen Ist-Zustand des Betriebszustandes anzuzeigen, wobei die Messeinrichtung (30. 33) eine verschwenkbare Drehanzeige (20) aufweist, **dadurch gekennzeichnet, dass** das Steuergerät (5) über Rastmittel (17, 37) verfügt, dass der Deckelknopf (2) über zu den Rastmitteln (17, 37) komplementäre Rastmittel (23, 54) verfügt, so dass das Steuergerät (5) in einer einzigen vorbestimmten Drehposition zum Deckelknopf (2) auf dem Deckelknopf (2) aufsetzbar ist, dass die Drehanzeige (20) über einen an dieser befestigten Permanentmagneten (35) verfügt und dass das Steuergerät (5) eine Magnetsensorvorrichtung (45) zur Erfassung der Drehposition der Drehanzeige (20) aufweist.

2. Vorrichtung nach Anspruch 1, **dadurch gekennzeichnet, dass** das Aufsetzen des Steuergerätes (5) in einer einzigen vorbestimmten Drehposition zum Deckelknopf (2) auf dem Deckelknopf (2) entweder das einrastbare Aufsetzen in einer vorbestimmten Drehposition oder das Festschrauben des Steuergerätes (5) auf dem Deckelknopf (2) bis in die vorbestimmte Drehposition oder einen Bajonettverschluss zwischen Steuergerät (5) und dem Deckelknopf (2) für ein Erreichen der vorbestimmten Drehposition umfasst.

3. Vorrichtung nach Anspruch 1 oder 2, **dadurch gekennzeichnet, dass** die Magnetsensorvorrichtung (45) eine Hallsonde ist.

4. Vorrichtung nach einem der Ansprüche 1 bis 3, **dadurch gekennzeichnet, dass** der Permanentmagnet ein Diametralmagnet ist, der zentriert vorzugsweise auf der Longitudinalachse (100) der Vorrichtung montiert ist.

5. Vorrichtung nach einem der Ansprüche 1 bis 4, **dadurch gekennzeichnet, dass** das Steuergerät (5) einen Sender aufweist, mit dessen Hilfe es möglich ist, ein Steuersignal zu erzeugen, welches in einer drahtlosen Weise zu einem Empfänger eines Heizgeräts oder Smart Device oder Router übermittelbar ist, um auf das Kochgefäss einzuwirken.

6. Vorrichtung nach einem der Ansprüche 1 bis 5, **dadurch gekennzeichnet, dass** für unterschiedliche Deckel (1) unterschiedlich starke Permanentmagneten (35) und unterschiedliche Einbauwinkelpositionen von Permanentmagneten (35) vorgesehen sind und dass das Steuergerät (5) ausgelegt ist, neben der Drehposition auch die Stärke des Permanentmagneten (35) zwecks Unterscheidung der Deckelknöpfe (2) festzustellen.

7. Vorrichtung nach einem der Ansprüche 1 bis 6, **dadurch gekennzeichnet, dass** das Steuergerät (5) ausgestaltet ist, ein Signal auszugeben, wenn ein Sollwert des Betriebszustandes erreicht ist.

## Claims

1. Apparatus for determining and displaying or monitoring at least one operating state of a cooking vessel with a lid (1), selected from the group of temperature, pressure or humidity of a cooking vessel, the apparatus having a lid knob (2) which can be fastened to the lid (1) of the cooking vessel, wherein a measuring apparatus (30, 33) for detecting the operating state and a control unit (5) with a signaling apparatus (8) is provided in the lid knob (2), the signaling apparatus (8) comprising a display apparatus for displaying an actual state of the operating state, wherein the measuring apparatus (30. 33) has a pivotable rotational indicator (20), **characterized in that** the control unit (5) has latching means (17, 37), **in that** the lid knob (2) has latching means (23, 54) which are complementary to the latching means (17, 37) so that the control unit (5) can be placed on the lid knob (2) in a single predetermined rotational position relative to the lid knob (2), **in that** the rotational indicator (20) has a permanent magnet (35) attached thereto, and **in that** the control apparatus (5) has a magnetic sensor apparatus (45) for detecting the rotational position of the rotational indicator (20).

2. Apparatus according to claim 1, **characterized in that** the placing of the control unit (5) in a single predetermined rotational position with respect to the lid knob (2) on the lid knob (2) comprises either the lockable placing in a predetermined rotational position or the screwing of the control unit (5) on the lid knob (2) up to the predetermined rotational position or a bayonet lock between the control unit (5) and the lid knob (2) for reaching the predetermined rotational position.

3. Apparatus according to claim 1 or 2, **characterized in that** the magnetic sensor apparatus (45) is a Hall probe.

4. Apparatus according to any one of claims 1 to 3, **characterized in that** the permanent magnet is a diametral magnet mounted centered preferably on the longitudinal axis (100) of the apparatus.

5. Apparatus according to any one of claims 1 to 4, **characterized in that** the control unit (5) comprises a transmitter by means of which it is possible to generate a control signal which is transmittable in a wireless manner to a receiver of a heater or smart apparatus or router in order to act on the cooking vessel.

6. Apparatus according to any one of claims 1 to 5, **characterized in that** different strength permanent magnets (35) and different installation angle positions of permanent magnets (35) are provided for different lids (1), and **in that** the control unit (5) is adapted to determine, in addition to the rotational position, the strength of the permanent magnet (35) for the purpose of distinguishing the lid knobs (2).

7. Apparatus according to any one of claims 1 to 6, **characterized in that** the control unit (5) is designed to output a signal when a setpoint value of the operating state is reached.

## Revendications

1. Dispositif pour déterminer et représenter ou surveiller au moins un état de fonctionnement d'un récipient de cuisson avec couvercle (1), choisi dans le groupe de la température, de la pression ou de l'humidité de l'air d'un récipient de cuisson, le dispositif comprenant un bouton de couvercle (2) pouvant être fixé sur le couvercle (1) du récipient de cuisson, où un dispositif de mesure (30, 33) pour détecter l'état de fonctionnement et un appareil de commande (5) avec un dispositif de signalisation (8) sont prévus dans ledit bouton de couvercle (2), le dispositif de signalisation (8) comprenant un dispositif d'affichage pour indiquer un état réel de l'état de fonctionnement, où le dispositif de mesure (30. 33) présente un indicateur rotatif (20) pivotant, **caractérisé en ce que** l'appareil de commande (5) dispose de moyens d'enclenchement (17, 37), **en ce que** le bouton de couvercle (2) dispose de moyens d'enclenchement (23, 54) complémentaires aux moyens d'enclenchement (17, 37), de sorte que l'appareil de commande (5) peut être placé sur le bouton de couvercle (2) dans une seule position de rotation prédéterminée par rapport au bouton de couvercle (2), **en ce que** l'indicateur de rotation (20) dispose d'un aimant permanent (35) fixé sur celui-ci et **en ce que** l'appareil de commande (5) présente un dispositif de détection magnétique (45) pour détecter la position de rotation de l'indicateur de rotation (20).

2. Dispositif selon la revendication 1, **caractérisé en ce que** la mise en place de l'appareil de commande (5) dans une seule position de rotation prédéterminée par rapport au bouton de couvercle (2) sur le bouton de couvercle (2) comprend soit la mise en place par encliquetage dans une position de rotation prédéterminée, soit le vissage de l'appareil de commande (5) sur le bouton de couvercle (2) jusqu'à la position de rotation prédéterminée, soit un verrouillage à baïonnette entre l'appareil de commande (5) et le bouton de couvercle (2) pour atteindre la position de rotation prédéterminée.

3. Dispositif selon la revendication 1 ou 2, **caractérisé en ce que** le dispositif de détection magnétique (45) est une sonde à effet Hall.

4. Dispositif selon l'une quelconque des revendications 1 à 3, **caractérisé en ce que** l'aimant permanent est un aimant diamétral monté de manière centrée, de préférence sur l'axe longitudinal (100) du dispositif.

5. Dispositif selon l'une quelconque des revendications 1 à 4, **caractérisé en ce que** le dispositif de commande (5) comprend un émetteur à l'aide duquel il est possible de générer un signal de commande transmissible de manière non filaire à un récepteur d'un appareil de chauffage ou smart apparatus ou routeur afin d'agir sur le récipient de cuisson.

6. Dispositif selon l'une quelconque des revendications 1 à 5, **caractérisé en ce que** des aimants permanents (35) de puissances différentes et des positions angulaires de montage d'aimants permanents (35) différentes sont prévus pour différents couvercles (1) et **en ce que** l'appareil de commande (5) est conçu pour déterminer, outre la position de rotation, la puissance de l'aimant permanent (35) afin de différencier les boutons de couvercle (2).

7. Dispositif selon l'une quelconque des revendications 1 à 6, **caractérisé en ce que** l'appareil de commande (5) est configuré pour émettre un signal lorsqu'une valeur de consigne de l'état de fonctionnement est atteinte.
